# EUROPEAN PATENT SPECIFICATION

(11) **EP 2 972 615 B1**
(45) Date of publication and mention of the grant of the patent: **06.05.2020**
(21) Application number: 14768524.2
(22) Date of filing: 20.02.2014
(51) Int. Cl.: G05B 19/042, H04W 72/12

(54) **RESOURCE OPTIMIZATION IN A FIELD DEVICE**
RESSOURCENOPTIMIERUNG IN EINER FELDVORRICHTUNG
OPTIMISATION DE RESSOURCES DANS UN DISPOSITIF DE CHAMP

(30) Priority: 15.03.2013 US 201313837251
(43) Date of publication of application: 20.01.2016
(73) Proprietor: Rosemount Inc., Chanhassen, MN 55317 (US)
(72) Inventor: LOVEGREN, Eric, Russell, Monticello, Minnesota 55362 (US); WEINBERGER, Robert, Michael, Prior Lake, Minnesota 55372 (US)
(74) Representative: Parker, Andrew James
(86) International application number: PCT/US2014/017388
(87) International publication number: WO 2014/149337

(56) References cited:
- EP-A1- 2 187 281
- WO-A1-2012/171586
- JP-A- 2008 192 158
- US-A1- 2006 100 807
- US-A1- 2008 279 155
- US-A1- 2011 254 760
- US-A1- 2012 143 378
- US-A1- 2012 161 978

## Description

### BACKGROUND

The present invention relates generally to industrial process field devices, and more particularly to an activity scheduling system for an industrial field device.

The term "field device" covers a broad range of process management devices that measure and control parameters such as pressure, temperature, and flow rate. Many field devices are transmitters which act as communication relays between a transducer for sensing or actuating an industrial process variable, and a remote control or monitoring device such as a computer in a control room. The output signal of a sensor, for example, is generally insufficient to communicate effectively with a remote control or monitoring device. A transmitter bridges this gap by receiving communication from the sensor, converting this signal to a form more effective for longer distance communication (for example, a modulated 4-20 mA current loop signal, or a wireless protocol signal), and transmitting the converted signal to the remote control or monitoring device.

Wireless field device networks are used to control and monitor disparate processes and environments. A single field device network may include field devices disposed to sense or actuate process parameters across a wide area, e.g. an oil field or manufacturing plant. In wireless network systems designed for sensor/actuator-based applications, many field devices in the network must be locally-powered because power utilities, such as 120V AC utilities or powered data buses, are not located nearby or are not allowed into hazardous locations where instrumentation, sensors, and actuators and safety monitors or human interface devices must be located without incurring great installation expense. "Locally-powered" means powered by a local power source, such as a self-contained electrochemical source (e.g., long-life batteries or fuel cells) or by a low-power energy-scavenging power source (e.g., vibration, solar, or thermoelectric). A common characteristic of local power sources is their limited energy capacity or limited power capacity, either stored, as in the case of a long-life battery, or produced, as in the case of a solar panel. Often, the economic need for low installation cost drives the need for battery-powered devices communicating as part of a wireless field device network. Effective utilization of a limited power source, such as a primary cell battery which cannot be recharged, is vital for a well-functioning wireless field device. Batteries are expected to last more than five years, and preferably last for a substantial portion of the life of the product.

In order to conserve power and network bandwidth, some wireless network protocols limit the amount of traffic any node or device can handle during any period of time by only turning device transceivers ON for limited amounts of time to listen for messages. Thus, to reduce average power, the protocol may allow duty-cycling of the transceivers between ON and OFF states. Some wireless network protocols may use a global duty cycle to save power such that the entire network is ON and OFF at the same time. Other protocols (e.g., TDMA-based protocols) may use a local duty cycle where only the communicating pair of nodes that are linked together are scheduled to turn ON and OFF in a synchronized fashion at predetermined times. Typically, the link is predetermined by assigning each pair of communicating network nodes a specific periodic time slot for communication over a specified RF frequency channel. Each field device is assigned a time slot during commissioning, and activates periodically at a commissioned rate. Process sensing field devices commonly take sensor measurements only shortly before turning device transceivers ON. Both powering transceivers and taking sensor measurements consume considerable power, and device-to-device communication ties up network bandwidth. Generally, each field device performs at least one resource-intensive function (e.g. periodic wireless communication, periodic process sensing or actuation) repetitiously at a commissioned rate.

Specific field device applications may require that resource-intensive functions be performed at high rates during some periods, while needing only lower rates or no activity during other periods. Conventional field device networks either operate such field devices continually at the higher function rates necessitated during high demand periods, or recommission field devices for high and low demand periods from a central control or monitoring server. In the former case, continual operation at high function rates consumes power and bandwidth unnecessarily during low demand periods. In the latter case, recommissioning consumes power and bandwidth, and can result in packet loss during the recommissioning process

US2012/0143378 discloses an operation scheduler for a building automation system, and allows for schedules to be created on a daily basis organizing the timings when certain devices art designed to function, for example controlling the lighting or temperature of different floors with a building.

### SUMMARY

The present invention is defined in the appended claims.

In one aspect, the invention is directed toward a field device assembly comprising a first process sensor, a wireless transceiver, and a processor. The first process sensor is disposed to sense a first process parameter. The wireless transceiver is configured to communicate wirelessly with a network manager. The processor is configured to process the sensed first process parameter, and to command the wireless transceiver and first process sensor to perform a first resource-intensive activity according to a first commissioned adaptive schedule whereby rates of the resource-intensive activity vary over time and/or based on sensed events.

In another embodiment, the present invention is directed towards a method of operating an industrial field device. The method comprises commissioning the field device with an adaptive schedule, performing a resource-intensive activity at a scheduled rate that varies over time based on the commissioned internal schedule, and varying the scheduled rate in response to sensed events specified by the preset internal schedule.

### BRIEF DESCRIPTION OF THE DRAWINGS

FIG. 1 is schematic system view of a wireless process network including a plurality of field devices.
FIG. 2 is a simplified schematic view of one field device of FIG. 1.
FIG. 3 is a flow diagram illustrating a method of scheduled operation for the field device of FIG. 2.

### DETAILED DESCRIPTION

The present invention is a scheduling system for resource optimization in industrial process field devices. Field devices are commissioned with dynamic schedules that specify varying rates to engage in resource-intensive activities such as wireless signal transmission and reception, process parameter sensing, sensor calibration, and process parameter actuation. Each field device varies the rates of these resource-intensive activities according to its respective dynamic schedule, without need for recommissioning.

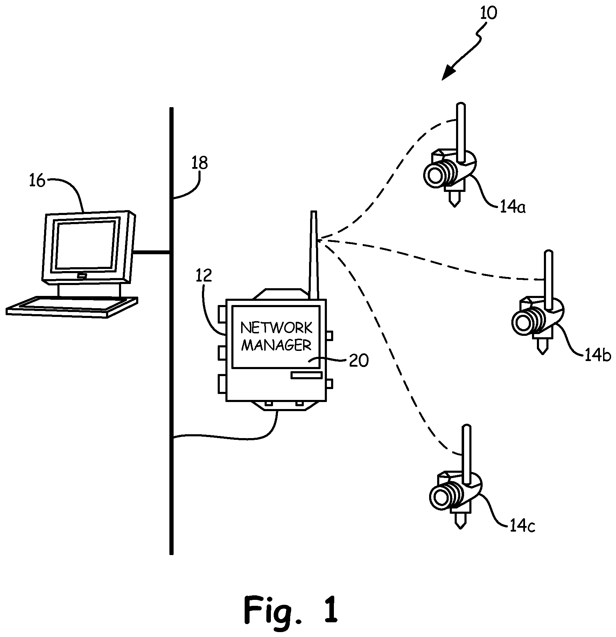

FIG. 1 is a schematic view of one embodiment of wireless process network 10, a network of centrally controlled and/or monitored sensor and/or actuator field devices. Wireless process network 10 comprises gateway 12, field devices 14 (including field devices 14a, 14b, and 14c), host computer 16, facility network 18, and network manager 20. Gateway 12 is a wireless-capable router disposed between host computer 16 and field devices 14. Field devices 14 are wireless-capable process transmitters, and may for instance be configured to receive, process, and transmit signals from one or more transducers disposed to sense process parameters such as fluid flow rate, level, temperature, or pressure. Alternatively, field devices 14 may be wireless controllers configured to command process actuators such as a valves or pumps in response to signals received via gateway 12. FIG. 1 depicts gateway 12 in direct wireless communication with each field device 14, but any network architecture may be adopted for wireless process network 10. In some embodiments, gateway 12 forms the hub of a hub-and-spoke network serving all field devices 14. In other embodiments, field devices 14 may be arranged in a mesh network, such that communication between gateway 12 and a field device (e.g. field device 14a) takes place via one or more intermediary field devices (e.g. field devices 14b, 14c). Host computer 16 forms at least a part of a control or monitoring system that receives sensor readings from and/or transmits actuator commands to field devices 14 via gateway 12. Host computer 16 may, for instance, be an operator terminal or automated controller. Host computer 16 collects and processes sensor readings from field devices 14.

Host computer 16 is depicted as connected to gateway 12 via facility network 18, which may for instance be a secondary wired or wireless network distinct from the hub-and-spoke or mesh network of field devices 14. In alternative embodiments, host computer 16 may communicate wirelessly directly with gateway 12. In some embodiments, host computer and gateway 12 may be incorporated into a single device, with no intervening facility network 18.

Network manager 20 is a software program that processes information from field devices 14, generating wireless links, control messages, communications schedules and data queries to suit the situation and application. Although network manager 20 is shown located on gateway 12, network manager 20 may alternatively be located on a computer remotely connected to gateway 12, for example host computer 16 or another computer connected to facility network 18.

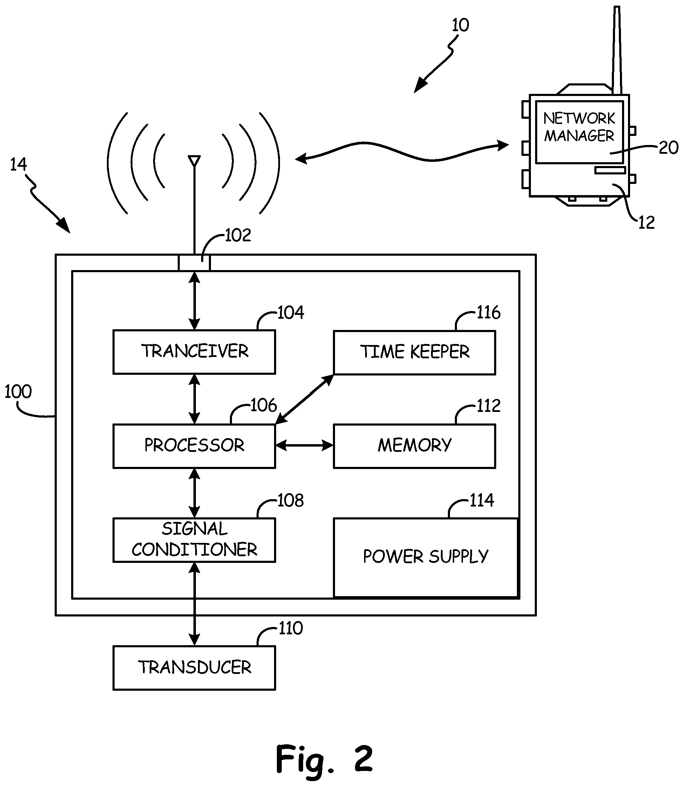

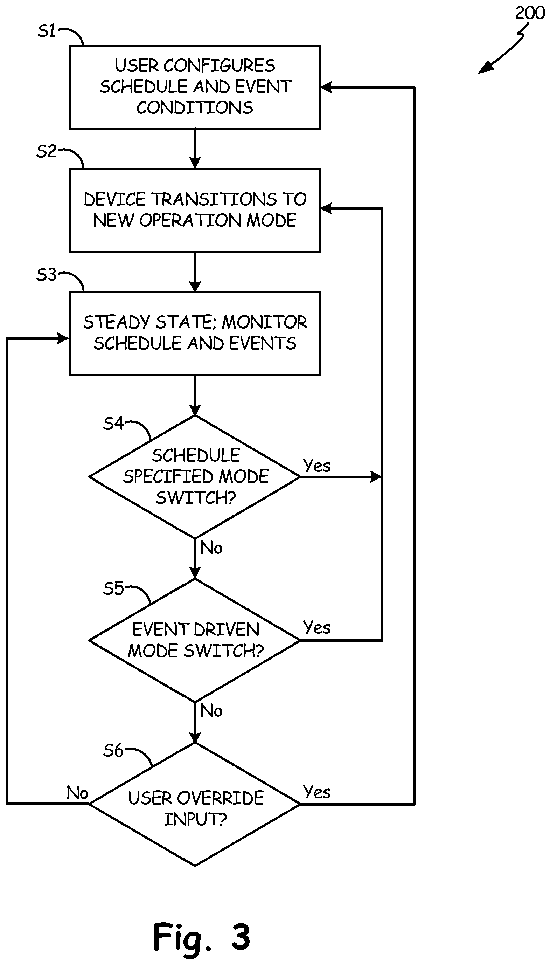

Network manager 20 provides commissioning information for each field device 14 according to parameters set by host computer 16 or locally applied to field device 14, as described below with respect to FIGS. 2 and 3. Commissioning information includes link information specifying a network protocol (e.g. WirelessHART, Fieldbus, or another appropriate protocol), and establishing each field device 14 as a constituent in wireless process network 10. Also included in this commissioning information is an adaptive schedule specifying varying rates of sensing, actuation, diagnostics, transmission, reception, and other resource-intensive activities for each field device 14. These rates vary over time according to the adaptive schedule, which may for example specify higher sensing and data transmission/reception rates during a critical period (e.g. in the mornings, at facility startup), and lower rates during non-critical periods (e.g. no sensing or data transmission over a holiday, while the facility is closed and non-operational). Each field device 14 operates according to its own adaptive schedule, and switches between rates of resource-intensive activities according to this schedule without a need for recommissioning. In addition, the adaptive schedule of each field device 14 may specify event conditions as triggers for changes in resource-intensive activity rates. For example, a field device disposed to sense and transmit measurements of differential pressure might transmit more frequent pressure measurements for five minutes after sensing a differential pressure above a threshold value, according to the adaptive schedule. Fixed (i.e. non-conditional) elements of the adaptive schedule are provided during commissioning by network manager 20, and are thus known by both network manager 20 and field device 14. Changes to data transmission rates triggered by specific event conditions are communicated to network manager 20 along with accompanying requests for bandwidth.

FIG. 2 is a simplified schematic depiction of field device 14 and gateway 12 running network manager 20 in wireless process network 10. Field device 14 comprises housing 100, antenna 102, transceiver 104, processor 106, signal conditioner 108, transducer 110, memory 112, power supply 114, and time keeper 116.

In this embodiment, housing 100 is a rigid, durable body which may be sealed to protect transceiver 104, processor 106, signal conditioner 108, memory 112, and power supply 114 against extreme temperatures and hazardous environments. Although transducer 110 is shown situated outside of housing 100, housing 100 may enclose transducer 110 in some embodiments of field device 14.

According to one embodiment, transceiver 104 is a signal transmitter/receiver which transmits and receives wireless signals via antenna 102. Processor 106 is a logic-capable data processor such as a microprocessor. Signal conditioner 108 comprises a digital and/or analog filter that operates on transducer signals to and/or from transducer 110. In some embodiments signal conditioner 108 may further comprise an analog/digital converter disposed to digitize sensor signals from transducer 110, or convert digital instructions into analog commands for transducer 110.

Transducer 110 can be a sensor that provides sensor readings to field device 14 for processing and transmission to control or monitoring system host computer 16, or an actuator that actuates a change in industrial process in response to signals received from computer 16 or network manager 20. Although the following description will focus on the embodiment where transducer 16 comprises a sensor, a person skilled in the art will understand that the invention could equally be applied to actuator systems. Although only one transducer 110 is depicted in FIG. 2, some embodiments of field device 14 may service multiple transducers 110. In some embodiments, transducer 110 may be a multi-function transducer capable of both actuating and sensing, or of sensing multiple parameters.

Memory 112 is a machine read-writable memory bank. Power supply 114 is an energy source powering transceiver 104, processor 106, signal conditioner 108, and memory 112. In some embodiments, power supply 114 may also drive transducer 110. In some embodiments, power supply 114 may be a limited capacity energy source such as a local energy harvester (e.g. a solar panel or a vibrational energy scavenger with limited output) or a storage device (e.g. a chemical battery or supercapacitor with limited charge).

To minimize energy drain on power supply 114 and usage of bandwidth in wireless process network 10, processor 106 activates transceiver 104 and/or transducer 110 according to the adaptive schedule (explained above) stored in memory 112. This adaptive schedule is received from host computer 16 via network manager 20 or a local configuration device during commissioning, and specifies different activation or activity rates for different time periods (e.g. times of day, days of the week, specific holidays), and/or in response to identified conditions (e.g. sensed values of transducer 110 falling within or outside of a particular range, either instantaneously or for a sustained period). More generally, processor 106 can activate or deactivate any resource-intensive function of field device 14 according to the adaptive schedule, as described below with respect to FIG. 3. Memory 112 can also store historical sensor readings from transducer 110, diagnostic protocols for transducer 110 and transceiver 104, and/or actuator commands for transducer 110.

Time keeper 116 is, in one embodiment, a real-time clock configured to provide processor 106 with a current time and date. This time and date is checked against the adaptive schedule stored in memory 112 to determine when rates of resource-intensive activities should be updated (see FIG. 3 and accompanying description, below). The adaptive schedule may, for instance, specify particular modes of operating with higher or lower rates of resource-intensive activities depending on calendar date, clock time, or day of the week provided by time keeper 116. Although transceiver 104, processor 106, signal conditioner 108, memory 112, and time keeper 116 are depicted as separate elements in FIG. 2, some embodiments of field device 14 may incorporate some or all of these elements into a common physical component, such as a multifunction printed wiring board.

FIG. 3 is a flow diagram illustrating scheduled operation method 200. Scheduled operation method 200 describes the operation of field device 14 according to the adaptive schedule introduced above. First, a human or machine user configures the adaptive schedule, prescribing rates of resource-intensive activities such as ON-states of transceiver 104 and diagnostic or measurement runs of transducer 110. (Step S1). This adaptive schedule is stored in memory 112, as described above, and can govern a plurality of distinct resource-intensive activities, each of which may be assigned different rates at different times. The adaptive schedule may, for instance, specify that transducer 110 senses a process parameter (e.g. pressure, temperature) every second from 8am to 9am on Tuesdays, during which period transceiver 102 switches on only once every minute to communicate data accumulated in memory 112. In some embodiments, the adaptive schedule may specify event conditions and corresponding resource-intensive activity responses to those event conditions. Possible event conditions include process measurement values from transducer 110 falling or remaining above or below threshold values, or command or data signals arriving from remote devices (e.g. gateway 12 or other field devices 14). For example, field device 14a could increase sensing rates of transducer 110 for a first parameter (e.g. pressure) in response to receiving a report from field device 14b indicating that a second parameter (e.g. flow rate) is unusually high. As another example, field device 14 could increase sensing rates or launch a sensor diagnostic of transducer 110 in response to sensor readings of transducer 110 falling outside of an expected range. Similarly, embodiments of field device 14 with multiple or multi-function transducers 110 may increase, decrease, or halt measurement of one parameter depending on measurement values of another. In some embodiments, field device 14 may include backup transducers 110 that remain dormant (i.e. are not activated for sensing) until or unless a primary transducer 110 fails or behaves anomalously.

After commissioning, processor 106 instructs transceiver 102 and transducer 110 to activate at the currently scheduled rate and times. (Step S2). This process continues until interrupted by a scheduled mode switch (Step S4), an event driven mode switch (Step S5), or a user override input (Step S6). Processor 104 periodically compares the current time and date as specified by time keeper 116 with the adaptive schedule stored in memory 112, and switches to a new mode with higher or rates of activity if indicated by the adaptive schedule. (Step S4). The period of this comparison is selected to be no greater than the minimum rate specified by the adaptive schedule for any activity. Similarly, processor 104 compares incoming data from transducer 110 and transceiver 104 with event flags specified by the adaptive schedule, and switches to an event driven mode where indicated by the adaptive schedule. (Step S5). Event-driven modes can override time-based modes specified in step S4, and can themselves have a duration or expiration time specified by the adaptive schedule and ascertained by comparison with time keeper 116. Absent a user override, field device 14 operates entirely based on the initially commissioned adaptive schedule stored in memory 112, without a need for recommissioning by gateway 12. (Step S6). Any override signal received via gateway 12 from a human or machine operator (e.g. from network manager 20 or a human operator at host computer 16) allows a new or altered adaptive schedule to be loaded onto memory 112. (Step S1).

Scheduled operation method 200 allows field device 14 to handle sustained operation at a variety of scheduled and/or event-driven activity rates without recommissioning. Method 200 thereby allows field device 14 to perform bandwidth- or power-intensive tasks only as often as needed for a current application or situation, reducing power draw on power supply 114 and congestion of wireless process network 10. Because a field device utilizing an adaptive schedule as described in scheduled operation method 200 does not require recommissioning to switch from one mode to another, dropped packets and network downtime due to recommissioning delays are minimized. Event-driven switches specified by the adaptive schedule allow field device 14 and wireless process network 10 to rapidly respond to arising process conditions, device faults, and sensor discrepancies.

## Claims

1. A field device assembly (14) comprising:
a first process sensor (110) disposed to sense a first process parameter;
a transceiver (104) configured to communicate with a network manager (20); and
a processor (106) configured to process the sensed first process parameter, and configured to command the wireless transceiver and first process sensor (110) to perform a first resource-intensive activity according to a first commissioned adaptive schedule whereby rates of the resource-intensive activity vary over time and in response to sensed events specified by the adaptive schedule,
wherein the first commissioned adaptive schedule is known to both the processor and the network manager,
wherein the processor is further configured to communicate changes in the first commissioned adaptive schedule that establish changes in the rates of the resource-intensive activity due to the sensed events to the network manager via the transceiver, together with accompanying requests for bandwidth.

2. The field device (14) of claim 1, wherein the transceiver (104) is a wireless transceiver configured to communicate with the network manager (20) wirelessly.

3. The field device (14) of claim 1, wherein communicating wirelessly with a network manager (20) comprises communicating via a wireless mesh network.

4. The field device (14) of claim 1, wherein the processor (106) is further configured to perform a second resource-intensive activity according to a second commissioned adaptive schedule different from the first internal schedule.

5. The field device (14) of claim 1, wherein the first resource-intensive activity is either:
a) a bandwidth-intensive activity; or
b) a power-intensive activity; or
c) comprises transmitting and/or receiving data with the wireless transceiver (104); or
d) comprises taking a sensor measurement with the first process sensor (110); or
e) comprises performing a sensor diagnostic of the first process sensor.

6. The field device (14) of claim 1, wherein the sensed event is sensed by the first process sensor (110).

7. The field device (14) of claim 1, further comprising a second process sensor disposed to sense a second process parameter, and wherein the sensed event is sensed by the second process sensor.

8. The field device (14) of claim 1, wherein the sensed event is received via the wireless transceiver (104).

9. The field device (14) of claim 1, further comprising a limited capacity power supply (114),
wherein the limited capacity power supply (114) is preferably a limited charge battery or supercapacitor or a limited output local energy harvester.

10. The field device (14) of claim 1, further comprising a time keeper (116).

11. The field device (14) of claim 1, wherein the rates of the resource-intensive activity according to the first commissioned adaptive schedule vary based on a calendar date, a clock time, and/or a day of the week provided by the time keeper (116).

12. A method of operating an industrial field device (14), the method comprising:
commissioning the field device (14) with a commissioned adaptive schedule;
performing a resource-intensive activity at a scheduled rate that varies over time based on the commissioned adaptive schedule; and
varying the scheduled rate in response to sensed events specified by the preset internal schedule;
communicating changes in the first commissioned adaptive schedule that establish changes in the rates of the resource-intensive activity due to the sensed events to the network manager via the transceiver, together with accompanying requests for bandwidth.

13. The method of claim 12, wherein the resource-intensive activity comprises operating a wireless transceiver (104).

14. The method of claim 12, wherein the resource-intensive activity comprises taking a sensor measurement of a process parameter;
wherein the sensed event preferably comprises the sensor measurement of the process parameter falling within an event range.

15. The method of claim 12, wherein the commissioned adaptive schedule specifies an increase to the scheduled rate for periods of high demand of the resource-intensive activity, and a decrease to the scheduled rate for periods of low demand of the resource-intensive activity.

## Patentansprüche

1. Feldgerätebaugruppe (14), umfassend:
einen ersten Prozesssensor (110), der zum Abfühlen eines ersten Prozessparameters angeordnet ist;
einen Transceiver (104), der dazu konfiguriert ist, mit einem Netzwerkmanager (20) zu kommunizieren; und
einen Prozessor (106), der dazu konfiguriert ist, den abgefühlten ersten Prozessparameter zu verarbeiten, und dazu konfiguriert ist, den drahtlosen Transceiver und den ersten Prozesssensor (100) anzusteuern, um eine erste ressourcenintensive Aktivität entsprechend einem ersten in Betrieb genommenen adaptiven Programm durchzuführen, wobei Raten der ressourcenintensiven Aktivität mit der Zeit und im Ansprechen auf abgefühlte Ereignisse variieren, die durch das adaptive Programm spezifiziert sind,
wobei das erste in Betrieb genommene adaptive Programm sowohl dem Prozessor als auch dem Netzwerkmanager bekannt ist,
wobei der Prozessor darüber hinaus dazu konfiguriert ist, dem Netzwerkmanager über den Transceiver Änderungen bei den Raten der ressourcenintensiven Aktivität aufgrund der abgefühlten Ereignisse zusammen mit begleitenden Anforderungen nach Bandbreite mitzuteilen.

2. Feldgerät (14) nach Anspruch 1, wobei es sich bei dem Transceiver (104) um einen drahtlosen Transceiver handelt, der dazu konfiguriert ist, drahtlos mit dem Netzwerkmanager (20) zu kommunizieren.

3. Feldgerät (14) nach Anspruch 1, wobei das drahtlose Kommunizieren mit einem Netzwerkmanager (20) umfasst, über ein drahtloses Maschennetzwerk zu kommunizieren.

4. Feldgerät (14) nach Anspruch 1, wobei der Prozessor (106) darüber hinaus dazu konfiguriert ist, eine zweite ressourcenintensive Aktivität entsprechend einem zweiten in Betrieb genommenen adaptiven Programm durchzuführen, das sich vom ersten internen Programm unterscheidet.

5. Feldgerät (14) nach Anspruch 1, wobei es sich bei der ersten ressourcenintensiven Aktivität entweder handelt um:
a) eine bandbreitenintensive Aktivität; oder
b) eine energieintensive Aktivität; oder
c) sie umfasst, Daten mit dem drahtlosen Transceiver (104) zu senden und/oder zu empfangen; oder
d) sie umfasst, eine Sensormessung mit dem ersten Prozesssensor (110) vorzunehmen; oder
e) sie umfasst, eine Sensordiagnose des ersten Prozesssensors durchzuführen.

6. Feldgerät (14) nach Anspruch 1, wobei das abgefühlte Ereignis durch den ersten Prozesssensor (110) abgefühlt wird.

7. Feldgerät (14) nach Anspruch 1, darüber hinaus einen zweiten Prozesssensor umfassend, der zum Abfühlen eines zweiten Prozessparameters angeordnet ist, und wobei das abgefühlte Ereignis durch den zweiten Prozesssensor abgefühlt wird.

8. Feldgerät (14) nach Anspruch 1, wobei das abgefühlte Ereignis über den drahtlosen Transceiver (104) empfangen wird.

9. Feldgerät (14) nach Anspruch 1, darüber hinaus eine kapazitätsbegrenzte Energieversorgung (114) umfassend,
wobei es sich bei der kapazitätsbegrenzten Energieversorgung (114) vorzugsweise um eine kapazitätsbegrenzte Ladebatterie oder einen Superkondensator oder einen abgabebegrenzten lokalen Energie-Harvester handelt.

10. Feldgerät (14) nach Anspruch 1, darüber hinaus einen Zeitnehmer (116) umfassend.

11. Feldgerät (14) nach Anspruch 1, wobei die Raten der ressourcenintensiven Aktivität entsprechend dem ersten in Betrieb genommenen adaptiven Programm auf Grundlage eines Kalenderdatums, einer Uhrzeit und/oder eines Wochentags variieren, das bzw. die bzw. der durch den Zeitnehmer (116) bereitgestellt wird.

12. Verfahren zum Betreiben eines industriellen Feldgeräts (14), wobei das Verfahren umfasst:
das Feldgerät (14) mit einem in Betrieb genommenen adaptiven Programm in Betrieb zu nehmen;
eine ressourcenintensive Aktivität mit einer geplanten Rate, die mit der Zeit variiert, auf Grundlage des in Betrieb genommenen adaptiven Programms durchzuführen; und
die geplante Rate im Ansprechen auf abgefühlte Ereignisse zu variieren, die durch das voreingestellte interne Programm spezifiziert sind;
dem Netzwerkmanager über den Transceiver Änderungen bei den Raten der ressourcenintensiven Aktivität aufgrund der abgefühlten Ereignisse zusammen mit begleitenden Anforderungen nach Bandbreite mitzuteilen.

13. Verfahren nach Anspruch 12, wobei die ressourcenintensive Aktivität umfasst, einen drahtlosen Transceiver (104) zu betreiben.

14. Verfahren nach Anspruch 12, wobei die ressourcenintensive Aktivität umfasst, eine Sensormessung eines Prozessparameters vorzunehmen;
wobei das abgefühlte Ereignis vorzugsweise die Sensormessung des in einen Ereignisbereich fallenden Prozessparameters umfasst.

15. Verfahren nach Anspruch 12, wobei das in Betrieb genommene adaptive Programm eine Erhöhung an der geplanten Rate für Perioden hohen Bedarfs an der ressourcenintensiven Aktivität, und eine Absenkung an der geplanten Rate für Perioden geringen Bedarfs an der ressourcenintensiven Aktivität spezifiziert.

## Revendications

1. Ensemble de dispositif de terrain (14) comprenant :
un premier capteur de processus (110) disposé pour capter un premier paramètre de processus ;
un émetteur-récepteur (104) configuré pour communiquer avec un gestionnaire de réseau (20) ; et
un processeur (106) configuré pour traiter le premier paramètre de processus capté, et configuré pour ordonner à l'émetteur-récepteur sans fil et au premier capteur de processus (110) d'effectuer une première activité intense en ressources conformément à un premier programme adaptatif mis en service, sachant que des taux de l'activité intense en ressources varient dans le temps et en réponse à des événements captés spécifiés par le programme adaptatif,
sachant que le premier programme adaptatif mis en service est connu à la fois du processeur et du gestionnaire de réseau,
sachant que le processeur est en outre configuré pour communiquer au gestionnaire de réseau, via l'émetteur-récepteur, des changements dans le premier programme adaptatif mis en service qui établissent des changements dans les taux de l'activité intense en ressources en raison à des événements captés, conjointement avec des demandes connexes en termes de largeur de bande.

2. Le dispositif de terrain (14) de la revendication 1, sachant que l'émetteur-récepteur (104) est un émetteur-récepteur sans fil configuré pour communiquer sans fil avec le gestionnaire de réseau (20).

3. Le dispositif de terrain (14) de la revendication 1, sachant que la communication sans fil avec un gestionnaire de réseau (20) comprend la communication via un réseau maillé sans fil.

4. Le dispositif de terrain (14) de la revendication 1, sachant que le processeur (106) est en outre configuré pour effectuer une deuxième activité intense en ressources conformément à un deuxième programme adaptatif mis en service différent du premier programme interne.

5. Le dispositif de terrain (14) de la revendication 1, sachant que la première activité intense en ressources est soit :
a) une activité intense en largeur de bande ; soit
b) une activité intense en puissance ; soit
c) comprend l'émission et/ou la réception de données avec l'émetteur-récepteur (104) sans fil ; soit
d) comprend la prise d'une mesure par capteur avec le premier capteur de processus (110) ; soit
e) comprend l'exécution d'un diagnostic de capteur du premier capteur de processus.

6. Le dispositif de terrain (14) de la revendication 1, sachant que l'événement capté est capté par le premier capteur de processus (110).

7. Le dispositif de terrain (14) de la revendication 1, comprenant en outre un deuxième capteur de processus disposé pour capter un deuxième paramètre de processus, et sachant que l'événement capté est capté par le deuxième capteur de processus.

8. Le dispositif de terrain (14) de la revendication 1, sachant que l'événement capté est reçu via l'émetteur-récepteur (104) sans fil.

9. Le dispositif de terrain (14) de la revendication 1, comprenant en outre une alimentation en puissance à capacité limitée (114),
sachant que l'alimentation en puissance à capacité limitée (114) est de préférence une batterie à charge limitée ou un supercondensateur ou un récupérateur d'énergie local à sortie limitée.

10. Le dispositif de terrain (14) de la revendication 1, comprenant en outre un chronométreur (116).

11. Le dispositif de terrain (14) de la revendication 1, sachant que les taux de l'activité intense en ressources conformément au premier programme adaptatif mis en service varient sur la base d'une date de calendrier, d'une heure d'horloge, et/ou d'un jour de la semaine fournis par le chronométreur (116).

12. Procédé de fonctionnement d'un dispositif de terrain (14) industriel, le procédé comprenant :
la mise en service du dispositif de terrain (14) avec un programme adaptatif mis en service ;
l'exécution d'une activité intense en ressources à un taux programmé qui varie dans le temps sur la base du programme adaptatif programmé ; et
la variation du taux programmé en réponse à des événements captés spécifiés par le programme interne prédéfini ;
la communication au gestionnaire de réseau, via l'émetteur-récepteur, de changements dans le premier programme adaptatif mis en service qui établissent des changements dans les taux de l'activité intense en ressources en raison des événements captés, conjointement avec des demandes connexes en termes de largeur.

13. Le procédé de la revendication 12, sachant que l'activité intense en ressources comprend le fonctionnement d'un émetteur-récepteur (104) sans fil.

14. Le procédé de la revendication 12, sachant que l'activité intense en ressources comprend la prise d'une mesure par capteur d'un paramètre de processus ;
sachant que l'événement capté comprend de préférence la mesure par capteur du paramètre de processus intervenant au sein d'une plage d'événement.

15. Le procédé de la revendication 12, sachant que le programme adaptatif mis en service spécifie une hausse au taux programmé pour des périodes de forte demande de l'activité intense en ressources, et une baisse au taux programmé pour des périodes de faible demande de l'activité intense en ressources.
